# EUROPÄISCHE PATENTSCHRIFT

(11) **EP 3 999 204 B1**
(45) Veröffentlichungstag und Bekanntmachung des Hinweises auf die Patenterteilung: **12.02.2025**
(21) Anmeldenummer: 20739982.5
(22) Anmeldetag: 13.07.2020
(51) Int. Cl.: B01D 27/08, B01D 29/96

(54) **FLUIDFILTER FÜR EINEN KRAFTWAGEN UND FILTERKARTUSCHE FÜR EINEN SOLCHEN FLUIDFILTER**
FLUID FILTER FOR A MOTOR VEHICLE AND FILTER CARTRIDGE FOR A FLUID FILTER OF THIS KIND
FILTRE À FLUIDE POUR UN VÉHICULE À MOTEUR ET CARTOUCHE FILTRANTE POUR UN FILTRE À FLUIDE DE CE TYPE

(30) Priorität: 15.07.2019 DE 102019004926
(43) Veröffentlichungstag der Anmeldung: 25.05.2022
(73) Patentinhaber: Daimler Truck AG, 70771 Leinfelden-Echterdingen (DE)
(72) Erfinder: SCHUMACHER, Eric, 70565 Stuttgart (DE)
(74) Vertreter: JENSEN & SON
(86) Internationale Anmeldenummer: PCT/EP2020/069706
(87) Internationale Veröffentlichungsnummer: WO 2021/009098

(56) Entgegenhaltungen:
- EP-A1- 2 201 993
- EP-A1- 3 228 374
- WO-A1-2015/004106
- WO-A1-2015/091665
- WO-A1-2018/067437
- IT-A1- 201600 097 797

## Beschreibung

Die Erfindung betrifft einen Fluidfilter für einen Kraftwagen, mit einer Filterkartusche, welche an einem Filtergehäuse des Fluidfilters festgelegt ist. Die Filterkartusche weist einen Aufnahmeraum auf, in welchem ein Filtermaterial angeordnet ist. Die Filterkartusche ist durch Drehen um eine Längsachse der Filterkartusche mit dem Filtergehäuse verbindbar. Des Weiteren betrifft die Erfindung eine Filterkartusche für einen solchen Fluidfilter.

Die WO 2015/091665 A1 und die EP 3 228 374 A1 beschreiben jeweils eine Filtervorrichtung mit einem Filterkopf, an dem ein Wechselfilter lösbar befestigt ist. Hierbei wirken kopfseitige Bajonettabschnitte mit gehäuseseitigen Bajonettabschnitten zusammen, welche die Form und Größe der kopfseitigen Bajonettabschnitte haben. Die kopfseitigen Bajonettabschnitte weisen jeweils einen Umfangsabschnitt auf, welcher sich umfangsmäßig parallel zu einem gedachten Kreiszylindermantel um eine Verbindungsachse des Wechselfilters erstreckt.

Die DE 696 29 208 T2 offenbart eine Kraftstofffilteranordnung mit einer Stützplatte im unteren Abschnitt des zugehörigen Filtergehäuses auf der ein Ringfilterelement aufliegt. Unter der Stützplatte ist ein Schmutzstoffbehälter angebracht. Die Stützplatte weist eine horizontale und flache spiralförmige Flüssigkeitspassage auf, durch die das Filtergehäuse mit dem Schmutzstoffbehälter verbunden ist. An seinem oberen Ende wird das in den Kraftstofffilter eingesetzte Ringfilterelement durch eine an der Deckplatte des Filtergehäuses mittige rohrförmige Verbindung, die mit einer Dichtung ummantelt ist, zentriert und gehalten.

Die DE 10 2016 212 591 A1 beschreibt eine Flüssigkeitsfiltereinrichtung, bei der ein im Filtergehäuse angeordnetes Ringfilterelement eine Rein- von einer Rohseite trennt. An einer unteren Endscheibe des Ringfilterelements ist ein Bypassventil vorgesehen. Zur Strömungsumlenkung der Flüssigkeit sind bspw. auf der Endscheibe spiralsegmentförmige Strömungsleitelemente angebracht. Auch bei dieser Konstruktion wird das in das Filtergehäuse eingesetzte Ringfilterelement durch ein zentrales Abflussrohr im Gehäusedeckel zentriert gehalten.

Die US 3 272 336 zeigt eine Ölfiltereinrichtung, deren Ringfiltereinsatz an seiner oberen Endscheibe spiralsegmentförmige Rippen aufweist, durch die das einfließende Rohöl in spiralförmige Bewegung gebracht wird, um eine zentrifugal wirkende Abscheidung von schwereren verunreinigenden Partikeln zu bewirken, die in einen Schmutzstoffbehälter unten im Filtergehäuse der Ölfiltereinrichtung geleitet werden.

Die EP 0 221 675 B1 beschreibt eine als Ölfilter ausgebildete Filterkartusche. Die eine Dichteinrichtung aufweisende Filterkartusche wird an einem Filterhalter angebracht, welcher an einem Motor ausgebildet ist. Hierfür sind an einer Innenseite einer zylindrischen Wand eines Gehäuses der Filterkartusche vier nach innen vorspringende Laschen ausgebildet. Auf Seiten des Filterhalters sind ebenfalls vier Laschen vorgesehen, welche jedoch demgegenüber bezogen auf eine Mittelachse der Filterkartusche nach außen vorspringen. Zur Montage der Filterkartusche werden die nach innen vorspringenden Laschen zwischen die nach außen vorspringenden Laschen eingesetzt. Dann wird die Filterkartusche ein Stück weit gedreht, sodass die nach innen vorspringenden Laschen die nach außen vorspringenden Laschen hintergreifen.

Als nachteilig ist hierbei der Umstand anzusehen, dass die Filterkartusche sehr genau relativ zu dem Filterhalter positioniert werden muss, um die Filterkartusche korrekt an dem Filterhalter befestigen zu können.

Des Weiteren ist nachteilig, dass die als Verriegelungselemente dienenden Laschen lediglich über die Hälfte eines Umfangs des Gehäuses der Filterkartusche Haltekräfte übertragen können. Denn für die Montage und die Demontage ist es erforderlich dafür zu sorgen, dass die auf Seiten der Filterkartusche vorgesehenen vier Laschen nicht mit den auf Seiten des Filterhalters vorgesehenen vier Laschen in Überdeckung sind.

Des Weiteren beschreibt die EP 0 221 675 B1 die Möglichkeit, eine Filterkartusche, welche an einer Endplatte einen Dichtring aufweist, auf einen Stutzen des Filterhalters aufzuschrauben, wobei der Stutzen mit einem Schraubgewinde versehen ist. Hierbei ist in der Endplatte eine Durchtrittsöffnung mit einem korrespondierenden Schraubgewinde vorgesehen.

Bei einer derartigen Anbringung der Filterkartusche an dem Filterhalter ist nachteilig, dass mehrere Umdrehungen der Filterkartusche erforderlich sind, damit der Dichtring gegen den Filterhalter gepresst wird. Und auch bei der Demontage ist das Abschrauben der Filterkartusche von dem Filterhalter entsprechend aufwendig.

Aufgabe der vorliegenden Erfindung ist es daher, einen Fluidfilter der eingangs genannten Art zu schaffen, bei welchem eine besonders einfache Montage der Filterkartusche bei zuverlässiger Dichtwirkung erreicht ist, und eine entsprechend einfach montierbare Filterkartusche anzugeben.

Diese Aufgabe wird durch einen Fluidfilter mit den Merkmalen des Patentanspruchs 1 und durch eine Filterkartusche mit den Merkmalen des Patentanspruchs 4 gelöst. Vorteilhafte Ausgestaltungen mit zweckmäßigen Weiterbildungen der Erfindung sind in den abhängigen Patentansprüchen angegeben.

Der erfindungsgemäße Fluidfilter für einen Kraftwagen umfasst eine Filterkartusche, welche an einem Filtergehäuse des Fluidfilters festgelegt ist. Die Filterkartusche weist einen Aufnahmeraum auf, in welchem ein Filtermaterial angeordnet ist. Durch Drehen um eine Längsachse der Filterkartusche ist die Filterkartusche mit dem Filtergehäuse verbindbar. An einer Endplatte der Filterkartusche ist ein Halteelement mit einem Steg angeordnet. Der Steg steht von einer Wand des Halteelements ab. Die Wand des Halteelements ist radial zur Längsachse spiralförmig ausgebildet. In einer Montagestellung der Filterkartusche hintergreift der Steg des Halteelements einen Haltesteg eines an dem Filtergehäuse angeordneten radial zur Längsachse ebenfalls spiralförmigen Widerlagers.

Es ist also auf Seiten der Filterkartusche ein radial zur Längsachse spiralförmiges Halteelement vorgesehen und auf Seiten des Filtergehäuses ein radial zur Längsachse eine Spiralform aufweisendes Widerlager. Durch diese Konstruktion wird eine besonders einfache Montage der Filterkartusche erreicht. Denn es braucht lediglich der Steg des Halteelements der Filterkartusche so relativ zu dem Haltesteg des Widerlagers positioniert zu werden, dass infolge des Drehens der Filterkartusche in eine Drehrichtung um die Längsachse der Steg des Halteelements den Haltesteg des Widerlagers hintergreift.

Die Montage der Filterkartusche an das Filtergehäuse des Fluidfilters lässt sich durch Drehen um die Längsachse der Filterkartusche mit einer sehr geringfügigen Drehbewegung erreichen. Im Gegensatz zum Aufschrauben einer Filterkartusche an ein Gegenstück auf Seiten des Filtergehäuses müssen nicht mehrere vollständige Umdrehungen um die Längsachse vorgenommen werden. Vielmehr ist eine kleine Drehbewegung zum Festlegen der Filterkartusche an dem Filtergehäuse des Fluidfilters ausreichend. Dadurch lassen sich sowohl die Montage als auch eine Demontage der Filterkartusche besonders rasch und aufwandsarm vornehmen.

Der Haltesteg des Widerlagers weist entlang der Drehrichtung eine Steigung gegenüber einem Anlagebereich des Filtergehäuses auf, das heißt, er verläuft entlang einer Steigung. An dem Anlagebereich liegt ein Dichtelement der Filterkartusche auf, wenn diese an dem Filtergehäuse des Fluidfilters festgelegt ist. Durch die Steigung gegenüber dem Anlagebereich wird erreicht, dass beim Festlegen der Filterkartusche an dem Filtergehäuse bei zunehmender Drehung um die Längsachse ein in Richtung der Längsachse der Filterkartusche wirkender Zug auf die Filterkartusche ausgeübt wird. Dies führt beim Drehen der Filterkartusche in die Drehrichtung zu einem besonders dicht sitzenden Anliegen des Dichtelements der Filterkartusche an dem Anlagebereich des Filtergehäuses.Aufgrund der radial zur Längsachse angelegten Spiralform der Wand des Halteelements lassen sich über die gesamte Länge der Spirale Haltekräfte übertragen. Diese Haltekräfte sorgen in der Montagestellung der Filterkartusche für das Festlegen der Filterkartusche an dem Filtergehäuse des Fluidfilters. Je nach Ausführung des Halteelements und nach zur Verfügung stehendem Bauraum kann eine Länge des spiralförmigen Halteelements - im Gegensatz beispielsweise zu einem Bajonettverschluss - einen größer als die Hälfte eines Umfangs der Filterkartusche sein oder sogar größer als der Umfang . So lässt sich eine besonders sichere und dicht sitzende Festlegung der Filterkartusche an dem Filtergehäuse erreichen.

Des Weiteren kann aufgrund der Abstimmung der Spiralform des Halteelements und der Spiralform des auf Seiten des Filtergehäuses vorgesehenen Widerlagers aufeinander dafür gesorgt werden, dass das Tauschteil in Form der Filterkartusche in der Montagestellung stets eine vorbestimmte, exakte Ausrichtung relativ zu dem Filtergehäuse aufweist. Dadurch lässt sich für eine Bedienperson, welche die Montage der Filterkartusche an dem Filtergehäuse vornimmt, sehr einfach optisch feststellen, ob die sich in der Montagestellung befindende Filterkartusche in eine gewünschte Endlage gebracht ist. Insbesondere kann so sichergestellt werden, dass an der Filterkartusche angebrachte Informationen, etwa eine Bauteilnummer, eine Sachnummer oder dergleichen, sich stets im Sichtbereich der Bedienperson oder eines derartigen Servicepersonals befinden, wenn die Filterkartusche in ihre Montagestellung verbracht ist.

Auch dies erleichtert das Austauschen der gebrauchten Filterkartusche durch eine neue beziehungsweise noch nicht gebrauchte Filterkartusche.

Aufgrund der Formgebung des Halteelements, welches die radial spiralförmig ausgebildete Wand und den von der Wand nach Art eines Flansches abstehenden Steg aufweist, ist das Halteelement im Querschnitt hakenförmig ausgebildet. Dementsprechend ist durch das Halteelement eine Spanngeometrie und Haltegeometrie in Bezug auf den Anlagebereich für die Dichtung bereitgestellt. Insbesondere der als Spanngeometrie beziehungsweise Haltegeometrie dienende Steg des Halteelements wird vorliegend bei einem Austausch der Filterkartusche zusammen mit der Filterkartusche erneuert. So kann dem Umstand Rechnung getragen werden, dass das Halteelement der Filterkartusche bei der Montage und im Betrieb der Filterkartusche einem Verschleiß unterliegen kann.

Je nach Einsatzzweck und Ausgestaltung des Fluidfilters können unterschiedliche Fluide mittels des in dem Aufnahmeraum der Filterkartusche angeordneten Filtermaterials gefiltert werden. So kann der Fluidfilter als Luftfilter einer Klimaanlage oder Belüftungsanlage des Kraftwagens ausgebildet sein, mittels welchem Umgebungsluft vor ihrem Eintreten in einen Fahrgastraum des Kraftwagens gefiltert werden kann. Der Fluidfilter kann jedoch auch als Luftfilter einer Verbrennungskraftmaschine des Kraftwagens ausgebildet sein oder als Filter zum Filtern von Kraftstoff. Des Weiteren ist es möglich, dass der Fluidfilter als Ölfilter ausgebildet ist oder als Wasserabscheider zum Abscheiden von Wasser aus einem Schmierstoff und/oder einem Kraftstoff. Darüber hinaus ist es möglich, dass der Fluidfilter als Lufttrockner ausgebildet ist, mittels welchem sich die Feuchte in einem Luft, insbesondere Druckluft, enthaltenden System des Kraftwagens, etwa der Druckluft in einer Bremsanlage, verringern lässt.

Vorzugsweise nimmt bei der Steigung, in Richtung der Längsachse der Filterkartusche gesehen, ein Abstand des Haltestegs vom Anlagebereich des Filtergehäuses in der Drehrichtung zu. Ein umgekehrter Verlauf der Steigung ist jedoch ebenfalls möglich.

Der einfachen Montage der Filterkartusche an das Filtergehäuse des Fluidfilters ist es zuträglich, wenn der die Steigung aufweisende Haltesteg in eine Drehrichtung um die Längsachse durchgängig ausgebildet ist, also in der Drehrichtung keine Unterbrechungen oder Durchbrüche aufweist.

Das spiralförmige Widerlager kann zumindest bereichsweise um einen rohrförmigen Stutzen des Filtergehäuses umlaufen. Der Stutzen ist hierbei in eine Öffnung eingeführt, welche in der Endplatte der Filterkartusche ausgebildet ist. Durch das Einführen des rohrförmigen Stutzens in die Öffnung kann dafür gesorgt werden, dass die Filterkartusche vor dem Verbringen in die Montagestellung so positioniert wird, dass durch das Drehen der Filterkartusche um die Längsachse die Filterkartusche zuverlässig in ihre Montagestellung verbracht werden kann. Insbesondere dient also das Einführen des rohrförmigen Stutzens des Filtergehäuses in die Öffnung, welche in der Endplatte der Filterkartusche ausgebildet ist, einer Vorpositionierung der Filterkartusche an dem Filtergehäuse bei der Montage der Filterkartusche an das Filtergehäuse.

Der rohrförmige Stutzen des Filtergehäuses kann einen Absatz aufweisen, an welchem ein insbesondere als O-Ring ausgebildetes Dichtelement der Filterkartusche aufliegen kann, wenn die Filterkartusche in ihrer Montagestellung an dem Filtergehäuse festgelegt ist.

Die erfindungsgemäße Filterkartusche für einen Fluidfilter eines Kraftwagens ist an einem Filtergehäuse des Fluidfilters festlegbar. Die Filterkartusche weist einen Aufnahmeraum auf, in welchem ein Filtermaterial angeordnet ist. Durch Drehen um eine Längsachse der Filterkartusche ist die Filterkartusche mit dem Filtergehäuse verbindbar. An einer Endplatte der Filterkartusche ist ein Halteelement mit einem Steg angeordnet, welcher von einer Wand des Halteelements absteht. Die Wand des Halteelements ist radial zur Längsachse spiralförmig ausgebildet. Der Steg des Halteelements ist dazu ausgebildet, in einer Montagestellung der Filterkartusche den Steg eines an dem Filtergehäuse angeordneten und radial zur Längsachse spiralförmigen Widerlagers zu hintergreifen. Durch das Hintergreifen des Haltestegs des Widerlagers mittels des Stegs des Halteelements der Filterkartusche ist die Festlegung der Filterkartusche an dem Filtergehäuse des Fluidfilters erreichbar. Hierbei braucht die Filterkartusche jedoch nur ein kleines Stück weit um ihre Längsachse gedreht zu werden. Folglich ist die Filterkartusche besonders einfach an das Filtergehäuse des Fluidfilters montierbar. Zudem ist auch die Demontage der Filterkartusche von dem Filtergehäuse des Fluidfilters rasch und aufwandsarm zu bewerkstelligen.

In diese Drehrichtung ist zum Befestigen der Filterkartusche an dem Filtergehäuse die Filterkartusche um die Längsachse drehbar.

Der Steg des Halteelements, genauer ein Abstand des Stegs von einer dem Filtermaterial abgewandten Oberfläche der Endplatte, weist entlang einer Drehrichtung, in welche die Filterkartusche zum Festlegen an dem Filtergehäuse um die Längsachse drehbar ist, eine Steigung auf.Aufgrund dieser Steigung wird zusammen mit dem Drehen der Filterkartusche um die Längsachse in die Drehrichtung eine axiale Bewegung der Filterkartusche hin zu dem Filtergehäuse bewirkt. So kann erreicht werden, dass ein Dichtelement der Filterkartusche gegen einen Anlagebereich gepresst wird, welcher auf Seiten des Filtergehäuses ausgebildet ist. Dennoch ist kein aufwendiges Eindrehen der Filterkartusche mit mehreren vollständigen Umdrehungen erforderlich, um die Filterkartusche in die Montagestellung zu verbringen. Vielmehr ist eine kleine Bewegung in die Drehrichtung für ein dichtsitzendes Festlegen der Filterkartusche an dem Filtergehäuse ausreichend.

Vorzugsweise nimmt ein Abstand des Stegs des Halteelements von einer dem Filtermaterial abgewandten Oberfläche der Endplatte in eine Drehrichtung zu. Eine umgekehrte Ausführung ist ebenfalls möglich.

Vorteilhaft ist die Filterkartusche durch weniger als eine vollständige Umdrehung um die Längsachse in die Montagestellung verbringbar. Dies ist einer sehr einfachen, aufwandsarmen Montage der Filterkartusche an das Filtergehäuse zuträglich.

Insbesondere kann vorgesehen sein, dass in der Montagestellung freie Enden des Stegs des Halteelements und freie Enden des Haltestegs bündig miteinander abschließen. Auf diese Weise kann erreicht werden, dass auch bei Einsatz von vergleichsweise wenig Material für das Halteelement und den Haltesteg in besonders großem Ausmaß mittels des Halteelements Haltekräfte auf den Haltesteg übertragbar sind.

Es kann vorgesehen sein, dass ein Krümmungsradius des Halteelements von einem Zentrum einer Spiralform der Wand des Halteelements hin zu einem Rand der Spiralform zunimmt. Dadurch lässt sich beim Festlegen der Filterkartusche an dem Filtergehäuse des Fluidfilters die Filterkartusche zunächst besonders einfach um die Längsachse drehen. Mit zunehmendem Drehen um die Längsachse und somit zunehmendem Verbringen der Filterkartusche in die Montagestellung hintergreift dann der Steg des Halteelements den Haltesteg des Widerlagers zunehmend weiter. Dies ermöglicht es einer Bedienperson, welche eine Montage der Filterkartusche vornimmt, also etwa einem Monteur oder Mechaniker, das Erreichen der Montagestellung der Filterkartusche sehr leicht festzustellen. Dennoch lässt sich die Filterkartusche zu Beginn des Drehens um die Längsachse sehr leicht in die Drehrichtung drehen. Und in der Montagestellung der Filterkartusche ist eine sehr belastbare Befestigung der Filterkartusche an dem Filtergehäuse erreichbar beziehungsweise erreicht.

Vorzugsweise ist an einem stirnseitigen Rand eines Gehäuses der Filterkartusche ein Dichtelement angeordnet, welches durch Festlegen der Filterkartusche an dem Filtergehäuse gegen einen Anlagebereich des Filtergehäuses gedrückt werden kann. Dadurch wird beim Austauschen der Filterkartusche auch das Dichtelement ausgetauscht, welches einem Verschleiß unterliegen kann.

Vorzugsweise ist der Aufnahemeraum in einem Gehäuse der Filterkartusche ausgebildet und zu einer Seite hin durch die Endplatte der Filterkartusche begrenzt. So ist ein sehr einfacher Aufbau der Filterkartusche erreichbar.

Insbesondere kann das Gehäuse der Filterkartusche topfförmig ausgebildet sein, wobei dann die Endplatte einem Boden des topfförmigen Gehäuses gegenüberliegt. Auch dies ist im Hinblick auf einen einfachen Aufbau der Filterkartusche vorteilhaft.

Des Weiteren kann die Endplatte eine Mehrzahl von Durchtrittsöffnungen aufweisen. Durch derartige Durchtrittsöffnungen kann ein zu filterndes Fluid in den Aufnahmeraum gelangen und/oder ein gefiltertes Fluid den Aufnahmeraum verlassen. Durch das Vorsehen mehrerer Durchtrittsöffnungen in der Endplatte kann eine besonders gleichmäßige Durchströmung des Filtermaterials mit dem Fluid erreicht werden.

Das Halteelement kann in Umfangsrichtung der Filterkartusche eine Mehrzahl von Durchbrüchen aufweisen. Mit anderen Worten braucht das die Spiralform aufweisende Halteelement nicht als durchgängige Spirale ausgebildet zu sein. Vielmehr können einzelne Abschnitte der spiralförmigen Wand des Halteelements die Spiralform bilden. Dementsprechend ist dann auch der von der Wand abstehende Steg nicht durchgängig ausgebildet. Vielmehr weist jeder Abschnitt der Wand einen von diesem Abschnitt abstehenden Stegabschnitt des Halteelements auf. Eine derartige, unterbrochene oder segmentierte Spiralform des Halteelements ist im Hinblick auf ein geringes Gewicht der Filterkartusche vorteilhaft.

Die für den erfindungsgemäßen Fluidfilter beschriebenen Vorteile und bevorzugten Ausführungsformen gelten auch für die erfindungsgemäße Filterkartusche und umgekehrt.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: in einer teilweise geschnittenen Darstellung einen als Lufttrockner ausgebildeten Fluidfilter eines Kraftwagens;
- Fig. 2: perspektivisch und ausschnittsweise eine Filterkartusche des Fluidfilters;
- Fig. 3: perspektivisch und ausschnittsweise ein Filtergehäuse des Fluidfilters, an welchem die Filterkartusche festgelegt werden kann;
- Fig. 4: einen ersten Schritt beim Montieren der Filterkartusche an das Filtergehäuse;
- Fig. 5: Komponenten der Filterkartusche gemäß Fig. 2, welche ein spiralförmiges Halteelement der Filterkartusche umfassen, wobei das Halteelement in einer Ausrichtung relativ zu einem an dem Filtergehäuse angeordneten spiralförmigen Widerlager gezeigt ist, wie sie vor dem Festlegen der Filterkartusche an dem Filtergehäuse vorliegt;
- Fig. 6: in einer teilweise geschnittenen Darstellung die in Fig. 5 gezeigten Komponenten des Fluidfilters, wobei eine Dichtung der Filterkartusche noch nicht gegen einen auf Seiten des Filtergehäuses vorgesehenen Anlagebereich gepresst ist;
- Fig. 7: die Komponenten der Filterkartusche gemäß Fig. 5, wobei die Filterkartusche in ihre Montagestellung verbracht ist, in welcher ein Steg des spiralförmigen Halteelements der Filterkartusche einen Haltesteg des spiralförmigen Widerlagers hintergreift; und
- Fig. 8: in einer teilweise geschnittenen Darstellung die in Fig. 7 gezeigten Komponenten des Fluidfilters.

In den Figuren sind gleiche oder funktionsgleiche Elemente mit jeweils gleichen Bezugszeichen versehen.

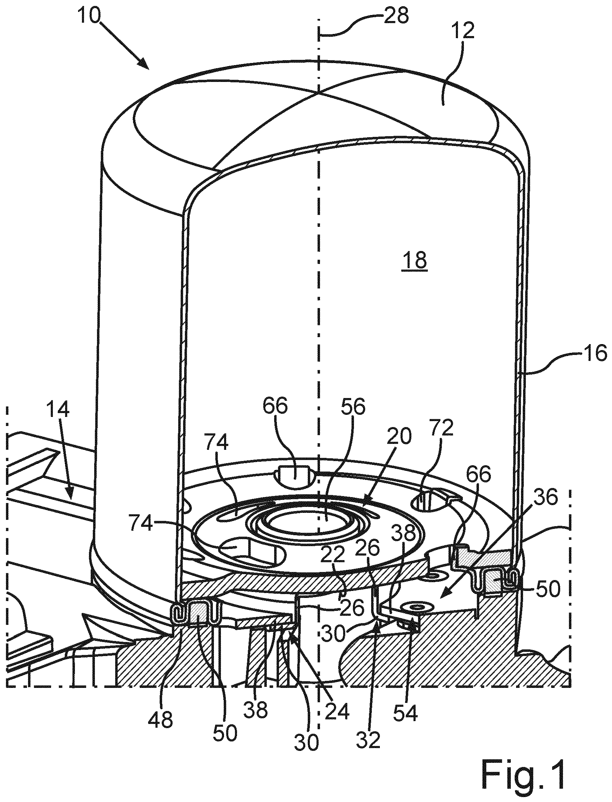

In Fig. 1 ist geschnitten und ausschnittsweise ein Fluidfilter 10 eines Kraftwagens gezeigt, wobei der Fluidfilter 10 beispielhaft als Lufttrockner ausgebildet ist. Dementsprechend ist eine Filterkartusche 12, welche an einem Filtergehäuse 14 des Fluidfilters 10 festgelegt ist, als austauschbare Lufttrocknerkartusche ausgebildet. Durch ein vorliegend topfförmiges Gehäuse 16 der Filterkartusche 12 ist ein Aufnahmeraum 18 teilweise begrenzt, in welchem ein (nicht gezeigtes) Filtermaterial der Filterkartusche 12 angeordnet ist. Bei dem Filtermaterial kann es sich beispielsweise um ein Granulat oder dergleichen handeln. Wenn der Fluidfilter 10 demgegenüber etwa als Ölfilter oder als Luftfilter für eine Klimaanlage oder eine Verbrennungskraftmaschine des Kraftwagens ausgebildet ist, so kann das Filtermaterial durch einen Faltenfilter oder dergleichen bereitgestellt sein.

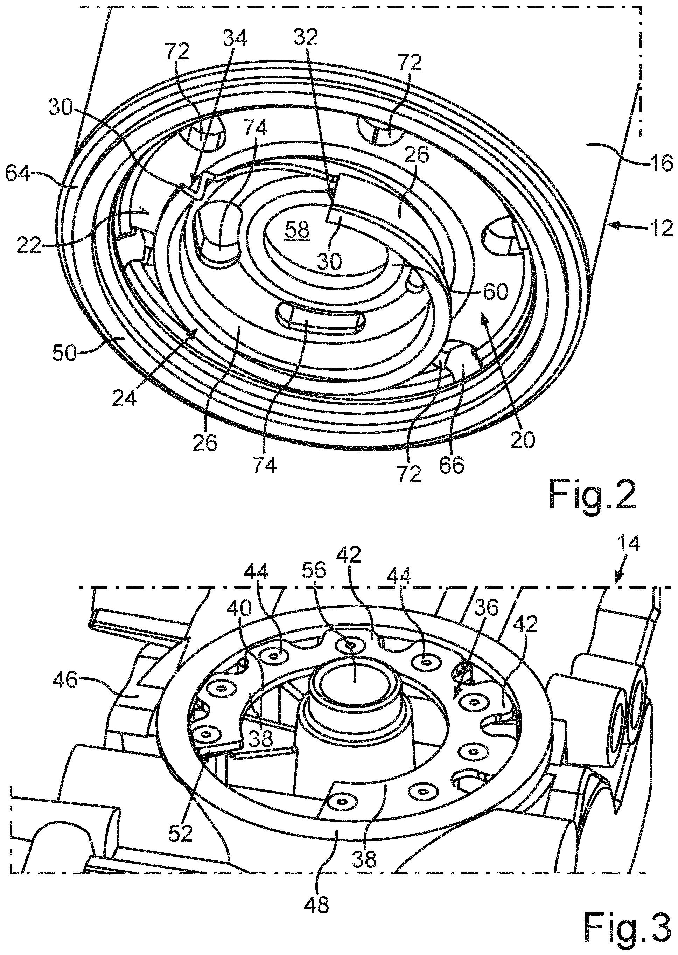

Zu einer Seite hin, vorliegend zu der dem Filtergehäuse 14 zugewandten Unterseite der Filterkartusche 12 hin, ist der Aufnahmeraum 18 durch eine Endplatte 20 der Filterkartusche 12 begrenzt. An einer dem Filtergehäuse 14 zugewandten Oberfläche der Endplatte 20, vorliegend also an einer Oberfläche 22 der Unterseite der Endplatte 20, ist ein Halteelement 24 angeordnet, dessen Gestalt in Fig. 2 besser zu erkennen ist.

Demgemäß ist das Halteelement 24 beziehungsweise ein derartiges Montageelement, welches für die Halterung der Filterkartusche 12 an dem Filtergehäuse 14 des Fluidfilters in der in Fig. 1 gezeigten Montagestellung der Filterkartusche 12 sorgt, spiralförmig ausgebildet. Hierbei weist eine Wand 26 des Halteelements 24, welche sich in Richtung einer Längsachse 28 (vergleiche Fig. 1) der Filterkartusche 12 erstreckt, radial zur Längsachse 28 eine Spiralform auf.

Von der Wand 26 des Halteelements 24 steht in radialer Richtung nach außen ein Flansch oder Steg 30 ab. In Fig. 1 sind die Wand 26 und der Steg 30 einmal in einer Schnittansicht zu sehen und einmal in einer Perspektivansicht auf ein freies Ende 32 des Halteelements 24. Dieses erste freie Ende 32 ist in Umfangsrichtung des vorliegend zylindrischen Gehäuses 16 der Filterkartusche 12 von einem weiteren freien Ende 34 des Halteelements 24 beabstandet (vergleiche Fig. 2).

Insbesondere aus einer Zusammenschau von Fig. 1 mit Fig. 3 ist ersichtlich, dass auf Seiten des Filtergehäuses 14 des Fluidfilters 10 ein Widerlager 36 für das Halteelement 24 vorgesehen ist. Das Widerlager 36 ist ebenfalls radial zur Längsachse 28 der Filterkartusche 12 spiralförmig ausgebildet. Das Widerlager 36 umfasst einen Haltesteg 38. Eine Stirnseite 40 des Haltestegs 38 beschreibt hierbei die Spiralform des Widerlagers 36. Wenn die Filterkartusche 12 an dem Filtergehäuse 14 festgelegt ist, also sich in ihrer in Fig. 1 gezeigten Montagestellung befindet, hintergreift der Steg 30 des Halteelements 24 den Haltesteg 38 des Widerlagers 36.

Vorliegend weist das Widerlager 36 eine Mehrzahl von Fortsätzen 42 auf (vergleiche Fig. 3), von welchen aus Gründen der Übersichtlichkeit lediglich einige mit einem Bezugszeichen versehen sind. Im Bereich dieser Fortsätze 42 ist das Widerlager 36 mittels einer Mehrzahl von Schraubbolzen 44 oder dergleichen Befestigungselementen an einem Grundkörper 46 des Filtergehäuses 14 festgelegt. Durch den Grundkörper 46 des Filtergehäuses 14 ist auch ein vorliegend ringförmig ausgebildeter, horizontal verlaufender Anlagebereich 48 bereitgestellt, gegen welchen dann, wenn sich die Filterkartusche 12 in ihrer Montagestellung befindet, ein vorliegend ringförmiges Dichtelement 50 (vergleiche Fig. 2) der Filterkartusche 12 gedrückt ist (vergleiche Fig. 1).

Für einen axialen, also in Richtung der Längsachse 28 der Filterkartusche 12 wirkenden Zug sorgen eine Steigung - beziehungsweise ein Steigungsverlauf - des Halteelements 24 und eine ebensolche Steigung - beziehungsweise ein Steigungsverlauf - des Haltestegs 38. Aus Fig. 1, insbesondere jedoch aus Fig. 3, ist ersichtlich, dass aufgrund der Steigung des Haltestegs 38 ein Abstand des Haltestegs 38 von dem Anlagebereich 48 in Richtung der Längsachse 28 gesehen zunimmt. Dementsprechend ist im Bereich eines ersten freien Endes 52 des Widerlagers 36 der Abstand des Haltestegs 38 von dem Anlagebereich 48 in Richtung der Längsachse 28 geringer als im Bereich eines zweiten freien Endes 54 des Widerlagers 36.

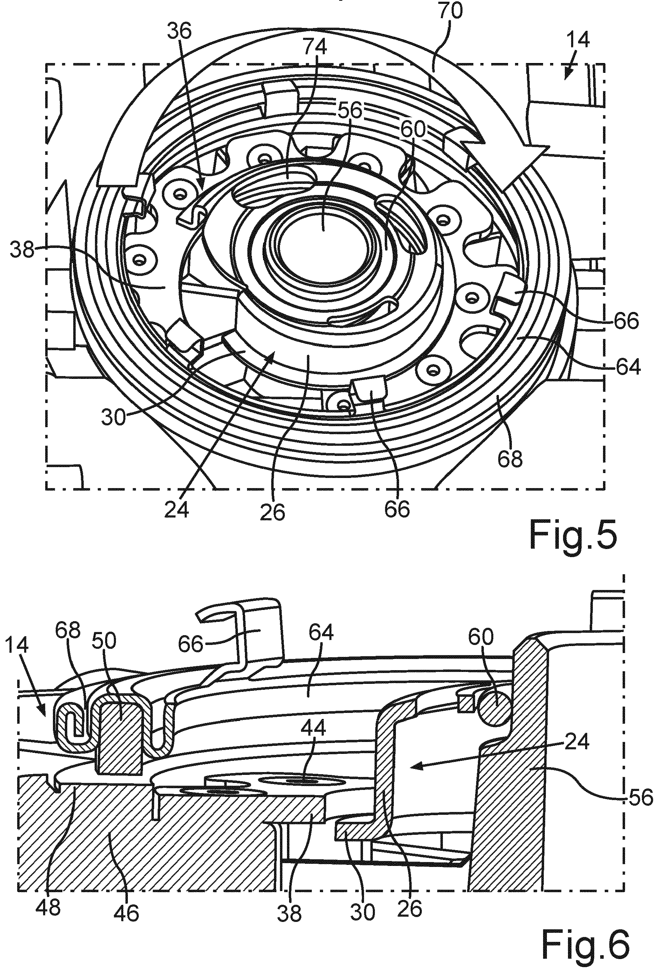

Demgegenüber ist ein Abstand des Stegs 30 des Halteelements 24 von der Oberfläche 22 der Unterseite der Endplatte 20 im Bereich des ersten freien Endes 32 des Halteelements 24 größer als im Bereich des zweiten freien Endes 34 des Halteelements 24. Der Abstand des Stegs 30 des Halteelements 24 von einer dem Filtermaterial abgewandten Oberfläche der Endplatte 20 nimmt also in eine Drehrichtung 70 zu (vergleiche Fig. 5), in welche zum Zwecke des Festlegens der Filterkartusche 12 an dem Filtergehäuse 14 die Filterkartusche 12 um die Längsachse 28 gedreht wird. Das im Querschnitt hakenförmig ausgebildete Montageelement oder Halteelement 24, welches die Wand 26 und den von der Wand 26 nach außen abstehenden Steg 30 umfasst, stellt somit einerseits eine Haltegeometrie und andererseits eine Spanngeometrie bereit.

Das Halteelement 24 kann, wie vorliegend beispielhaft gezeigt, in Umfangsrichtung des Gehäuses 16 durchgängig ausgebildet sein. In Varianten des Fluidfilters 10 kann dieses Halteelement 24 jedoch auch segmentiert ausgebildet sein, also eine Mehrzahl von (vorliegend nicht gezeigten) Durchbrüchen aufweisen. Dementsprechend ist dann nicht nur das erste freie Ende 32 von dem gegenüberliegenden freien Ende 34 des Halteelements 24 beabstandet. Vielmehr sind dann auf einer Strecke von dem ersten freien Ende 32 hin zu dem zweiten freien Ende 34 des Halteelements 24 weitere Durchbrüche vorhanden, in welchen zumindest der Steg 30 oder auch der Steg 30 und die Wand 26 nicht vorhanden sind. Auch dann beschreiben jedoch weiterhin die Abschnitte der Wand 26 die Spiralform, so dass die Durchbrüche aufweisende Wand 26 des Halteelements 24 spiralförmig ausgebildet ist.

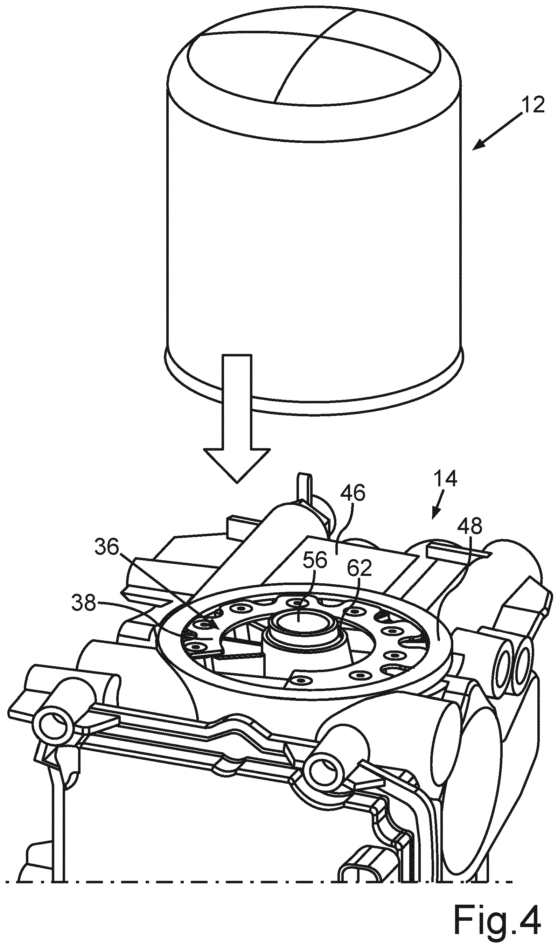

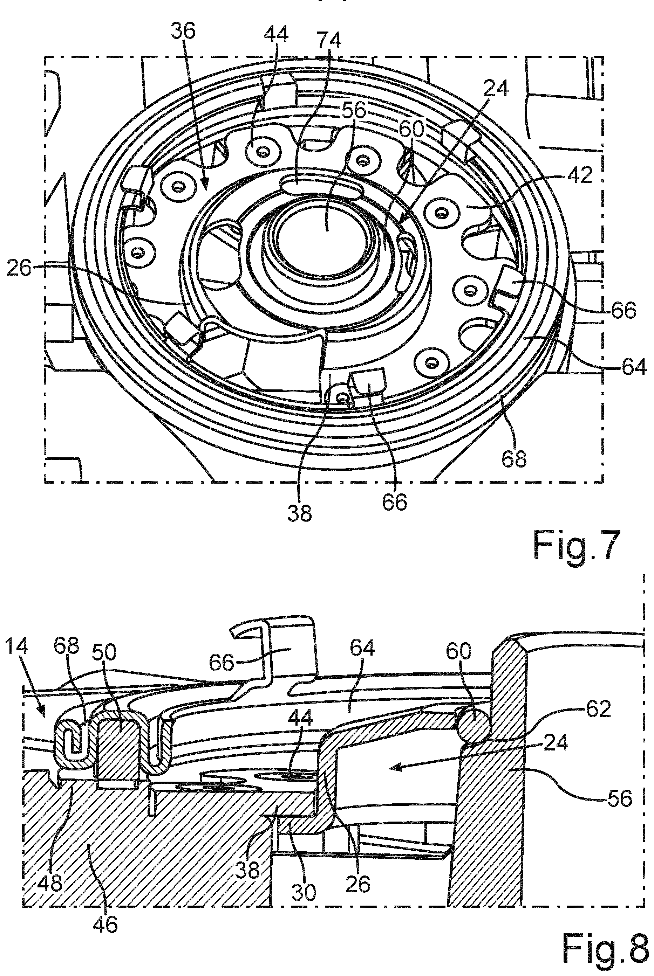

Mit Bezug zunächst auf Fig. 4 soll die Montage der Filterkartusche 12 an das Filtergehäuse 14 des Fluidfilters 10 erläutert werden. Dementsprechend wird die Filterkartusche 12 in Richtung ihrer Längsachse 28 (vergleiche Fig. 1) auf das Filtergehäuse 14 aufgesetzt. Hierbei wird ein rohrförmiger Stutzen 56 des Filtergehäuses 14 in eine Öffnung 58 eingeführt, welche in der Endplatte 20 der Filterkartusche 12 ausgebildet ist (vergleiche Fig. 2). Um die Öffnung 58 läuft ein vorliegend als Dichtring 60 oder O-Ring ausgebildetes Dichtelement um (vergleiche Fig. 2). Wenn die Filterkartusche 12 an dem Filtergehäuse 14 festgelegt ist, so liegt dieser Dichtring 60 an einem stufenförmigen Absatz 62 an, welcher an dem rohrförmigen Stutzen 56 ausgebildet ist (vergleiche Fig. 8).

In Fig. 5 sind von der Filterkartusche 12 lediglich das Halteelement 24 sowie ein ringförmiges Halteprofil 64 gezeigt, welches der Halterung des vorliegend ringförmigen Dichtelements 50 der Filterkartusche 12 dient (vergleiche Fig. 2 und Fig. 6). Das Halteprofil 64 weist vorliegend eine Mehrzahl von Befestigungslaschen 66 auf, mittels welchen das Halteprofil 64 an der Endplatte 20 gehalten ist (vergleiche Fig. 1). Des Weiteren weist das Halteprofil 64 einen Falzbereich 68 auf, in welchen ein stirnseitiges Ende einer Seitenwand des Gehäuses 16 der Filterkartusche 12 eingeführt ist (vergleiche Fig. 1). Auf diese Weise ist vorliegend das Gehäuse 16 mit dem Halteprofil 64 verbunden.

In Fig. 5 ist der Übersichtlichkeit halber die Endplatte 20 nicht dargestellt. Gemäß Fig. 5 ist die Filterkartusche 12 zum Zwecke der Montage so auf das Filtergehäuse 14 aufgesetzt, dass der rohrförmige Stutzen 56 durch die Öffnung 58 hindurchtritt, welche in der Endplatte 20 der Filterkartusche 12 ausgebildet ist. Insbesondere aus einer Zusammenschau von Fig. 5 mit Fig. 6 ist erkennbar, dass bei dieser Vorpositionierung der Filterkartusche 12 an dem Filtergehäuse 14 der Steg 30 des Halteelements 24 den Haltesteg 38 des Widerlagers 36 noch nicht hintergreift. Diesbezüglich ist aus Fig. 6 des Weiteren ersichtlich, dass bei dieser Vorpositionierung der Filterkartusche 12 an dem Filtergehäuse 14 auch das Dichtelement 50 noch nicht gegen den Anlagebereich 48 des Filtergehäuses 14 gepresst ist.

Durch ein Drehen der Filterkartusche 12 um ihre Längsachse 28 in die Drehrichtung 70, welche in Fig. 5 durch einen Pfeil veranschaulicht ist, wird anschließend beim Verbringen der Filterkartusche 12 in ihre Montagestellung bewirkt, dass sich das Halteelement 24 an dem Widerlager 36 verhakt. Hierbei hintergreift der Steg 30 den Haltesteg 38.

In Fig. 7 sind von der in seine Montagestellung beziehungsweise Endstellung verbrachten Filterkartusche 12 ebenfalls lediglich das Halteelement 24, das Halteprofil 64 und der Dichtring 60 gezeigt. Jedoch ist gemäß Fig. 7 die Filterkartusche 12 und mit diesem das Halteelement 24 ein Stück weit in die Drehrichtung 70 gedreht. Folglich ist die Filterkartusche 12 über das Halteelement 24 mit dem Filtergehäuse 14 verhakt.

Aufgrund der Steigung des Widerlagers 36 und der mit dieser Steigung korrespondierenden Steigung des Halteelements 24 wirkt beim Drehen der Filterkartusche 12 in die Drehrichtung 70 auf das Filtergehäuse 14 ein Zug in Richtung der Längsachse 28, also ein Axialzug. Dies führt dazu, dass in der Montagestellung der Filterkartusche 12 die Dichtung 50 gegen den Anlagebereich 48 des Filtergehäuses 14 gepresst ist (vergleiche Fig. 8). Des Weiteren ist aus Fig. 8 ersichtlich, wie der Steg 30 des Halteelements 24, welcher von der spiralförmigen Wand 26 absteht, den ebenfalls spiralförmigen Haltesteg 38 des Widerlagers 36 hintergreift.

Zum Wechseln der Filterkartusche 12 beziehungsweise bei einem Einbau einer neuen Filterkartusche 12 wird somit das Tauschteil in Form der Filterkartusche 12 zunächst auf das Filtergehäuse 14 aufgesetzt. Dann wird die Filterkartusche 12 um die Längsachse 28 verdreht. Dadurch wird die Filterkartusche 12 hinterschnittig mit dem Filtergehäuse 14 verbunden und ausgerichtet. Aufgrund der Steigungen des Widerlagers 36 und des Halteelements 24 wird zugleich mit der Drehbewegung auch eine axiale Bewegung der Filterkartusche 12 ausgeführt. Diese axiale Bewegung sorgt für das Anpressen der Dichtung beziehungsweise des Dichtelements 50 des Tauschteils auf die Dichtfläche, welche durch den Anlagebereich 48 des Filtergehäuses 14 oder eines entsprechenden Moduls des Fluidfilters 10 bereitgestellt ist.

Aus Fig. 2 und aus Fig. 1 ist ersichtlich, dass in der Endplatte 20 zum einen Durchtrittsöffnungen 72 ausgebildet sind, in welche die Befestigungslaschen 66 eingreifen. Vorliegend kann über diese Durchtrittsöffnungen 72, aber auch über weitere in der Endplatte 20 ausgebildete Durchtrittsöffnungen 74, welche zudem auch in dem Halteelement 24 ausgebildet sind (vergleiche Fig. 5 und Fig. 7), gefiltertes Fluid aus dem Aufnahmeraum 18 austreten. Das zu filternde Fluid kann demgegenüber über den rohrförmigen Stutzen 56 in den Aufnahmeraum 18 eingebracht werden. Ebenso ist es möglich, über die Durchtrittsöffnungen 72, 74 das zu filternde Fluid in den Aufnahmeraum 18 einzubringen. Dann kann das gefilterte Fluid den Aufnahmeraum 18 über den rohrförmigen Stutzen 56 verlassen. Die Durchtrittsöffnungen 74 in der Endplatte 20 fluchten vorliegend mit den Durchtrittsöffnungen 74, welche in dem Halteelement 24 ausgebildet sind (vergleiche Fig. 2).

Bei dem vorliegend topfförmigen Gehäuse 16 der Filterkartusche 12 ist der Aufnahmeraum 18 zum einen durch die Mantelwand begrenzt, welche durch Einstecken in den Falzbereich 68 an dem Halteprofil 64 der Filterkartusche 12 festgelegt ist. Zum anderen ist der Aufnahmeraum 18 vorliegend durch die Endplatte 20 begrenzt, welche einer bodenseitigen Wandung des topfförmigen Gehäuses 16 gegenüberliegt.

## Patentansprüche

1. Fluidfilter für einen Kraftwagen, mit einer Filterkartusche (12), welche an einem Filtergehäuse (14) des Fluidfilters (10) festgelegt ist, wobei die Filterkartusche (12) einen Aufnahmeraum (18) aufweist, in welchem ein Filtermaterial angeordnet ist, und wobei die Filterkartusche (12) durch Drehen um eine Längsachse (28) der Filterkartusche (12) mit dem Filtergehäuse (14) verbindbar ist, an einer Endplatte (20) der Filterkartusche (12) ein Halteelement (24) mit einem Steg (30) angeordnet ist, welcher von einer Wand (26) des Halteelements (24) absteht,
**dadurch gekennzeichnet, dass**
die Wand (26) des Halteelements (24) radial zur Längsachse (28) gesehen spiralförmig ausgebildet ist, und wobei in einer Montagestellung der Filterkartusche (12) der Steg (30) des Halteelements (24) einen Haltesteg (38) eines an dem Filtergehäuse (14) angeordneten und radial zur Längsachse (28) gesehen spiralförmigen Widerlagers (36) hintergreift, und der Haltesteg (38) in Richtung der Längsachse (28) gesehen gegenüber einem Anlagebereich (48) des Filtergehäuses (14), an welchem ein Dichtelement (50) der Filterkartusche (12) anliegt, entlang einer Drehrichtung (70) eine Steigung aufweist.

2. Fluidfilter nach Anspruch 1,
**dadurch gekennzeichnet, dass**
bei der Steigung des um die Längsachse (28) durchgängig ausgebildeten Haltestegs (38) ein Abstand des Haltestegs (38) vom Anlagebereich (48) des Filtergehäuses (14) in die Drehrichtung (70) zunimmt.

3. Fluidfilter nach Anspruch 1 oder 2,
**dadurch gekennzeichnet, dass**
das spiralförmige Widerlager (36) zumindest bereichsweise um einen rohrförmigen Stutzen (56) des Filtergehäuses (14) umläuft, welcher in eine in der Endplatte (20) der Filterkartusche (12) ausgebildete Öffnung (58) eingeführt ist.

4. Filterkartusche für einen Fluidfilter (10) eines Kraftwagens, welche an einem Filtergehäuse (14) des Fluidfilters (10) festlegbar ist, wobei die Filterkartusche (12) einen Aufnahmeraum (18) aufweist, in welchem ein Filtermaterial angeordnet ist, und wobei die Filterkartusche (12) durch Drehen um eine Längsachse (28) der Filterkartusche (12) mit dem Filtergehäuse (14) verbindbar ist, an einer Endplatte (20) der Filterkartusche (12) ein Halteelement (24) mit einem Steg (30) angeordnet ist, welcher von einer Wand (26) des Halteelements (24) absteht,
**dadurch gekennzeichnet, dass**
die Wand (26) des Halteelements (24) in radialer Richtung zur Längsachse (28) gesehen spiralförmig ausgebildet ist, und wobei der Steg (30) des Halteelements (24) dazu ausgebildet ist, in einer Montagestellung der Filterkartusche (12) einen Haltesteg (38) eines an dem Filtergehäuse (14) angeordneten und radial zur Längsachse (28) gesehen spiralförmigen Widerlagers (36) zu hintergreifen, wobei ein Abstand des Stegs (30) des Halteelements (24) von einer dem Filtermaterial abgewandten Oberfläche (22) der Endplatte (20) in eine Drehrichtung (70), in welche zum Festlegen der Filterkartusche (12) an dem Filtergehäuse (14) die Filterkartusche (12) um die Längsachse (28) drehbar ist, eine Steigung aufweist.

5. Filterkartusche nach Anspruch 4,
**dadurch gekennzeichnet, dass**
bei der Steigung der Abstand des Stegs (30) zur abgewandten Oberfläche (22) in Drehrichtung (70) zunimmt.

6. Filterkartusche nach Anspruch 4 oder 5,
**dadurch gekennzeichnet, dass**
die Filterkartusche (12) durch weniger als eine vollständige Umdrehung um die Längsachse (28) in die Montagestellung verbringbar ist, in welcher insbesondere freie Enden (32, 34) des Stegs (30) des Halteelements (24) und freie Enden (52, 54) des Haltestegs (38) bündig miteinander abschließen.

7. Filterkartusche nach einem der Ansprüche 4 bis 6,
**dadurch gekennzeichnet, dass**
ein Krümmungsradius des Halteelements (24) von einem Zentrum einer Spiralform der Wand (26) des Halteelements (24) hin zu einem Rand der Spiralform zunimmt.

8. Filterkartusche nach einem der Ansprüche 4 bis 7,
**dadurch gekennzeichnet, dass**
an einem stirnseitigen Rand eines Gehäuses (16) der Filterkartusche (12) ein Dichtelement (50) angeordnet ist, welches durch Festlegen der Filterkartusche (12) an dem Filtergehäuse (14) gegen einen Anlagebereich (48) des Filtergehäuses (14) drückbar ist.

9. Filterkartusche nach einem der Ansprüche 4 bis 8,
**dadurch gekennzeichnet, dass**
der Aufnahmeraum (18) in einem, insbesondere topfförmigen, Gehäuse (16) der Filterkartusche (12) ausgebildet und zu einer Seite hin durch die, insbesondere eine Mehrzahl von Durchtrittsöffnungen (72, 74) aufweisende, Endplatte (20) der Filterkartusche (12) begrenzt ist.

10. Filterkartusche nach einem der Ansprüche 4 bis 9,
**dadurch gekennzeichnet, dass**
das Halteelement (24) in Umfangsrichtung der Filterkartusche (12) eine Mehrzahl von Durchbrüchen aufweist.

## Claims

1. A fluid filter for a motor vehicle, comprising a filter cartridge (12) secured to a filter housing (14) of the fluid filter (10), wherein the filter cartridge (12) has an accommodation space (18), in which a filter material is disposed, and wherein the filter cartridge (12) is connectible to the filter housing (14) by rotation about a longitudinal axis (28) of the filter cartridge (12), a retaining element (24) comprising a land (30) projecting from a wall (26) of the retaining element (24) being disposed on an end plate (20) of the filter cartridge (12),
**characterised in that**
the wall (26) of the retaining element (24), when viewed radially to the longitudinal axis (28), is helically formed, and wherein, in a mounting position of the filter cartridge (12), the land (30) of the retaining element (24) engages behind a retaining land (38) of an abutment (36) disposed on the filter housing (14) and which is helical when viewed radially to the longitudinal axis (28), and the retaining land (38), when viewed in the direction of the longitudinal axis (28), has a gradient along a direction of rotation (70) with respect to a contact region (48) of the filter housing (14), which a sealing element (50) of the filter cartridge (12) contacts.

2. The fluid filter according to claim 1,
**characterised in that**
with the gradient of the retaining land (38), which is continuously formed around the longitudinal axis (28), a distance of the retaining land (38) from the contact region (48) of the filter housing (14) increases in the direction of rotation (70).

3. The fluid filter according to claim 1 or 2,
**characterised in that**
the helical abutment (36) at least partially surrounds a tubular connector (56) of the filter housing (14) inserted into an opening (58) formed in the end plate (20) of the filter cartridge (12).

4. A filter cartridge for a fluid filter (10) of a motor vehicle, which is securable to a filter housing (14) of the fluid filter (10), wherein the filter cartridge (12) has an accommodation space (18), in which a filter material is disposed, and wherein the filter cartridge (12) is connectible to the filter housing (14) by rotation about a longitudinal axis (28) of the filter cartridge (12), a retaining element (24) comprising a land (30) projecting from a wall (26) of the retaining element (24) being disposed on an end plate (20) of the filter cartridge (12),
**characterised in that**
the wall (26) of the retaining element (24), when viewed in a radial direction to the longitudinal axis (28), is helically formed, and wherein the land (30) of the retaining element (24) is formed to, in a mounting position of the filter cartridge (12), engage behind a retaining land (38) of an abutment disposed on the filter housing (14) and which is helical when viewed radially to the longitudinal axis (28), wherein a distance of the land (30) of the retaining element (24) from a surface (22) of the endplate (20) facing away from the filter material has a gradient in a direction of rotation (70) in which the filter cartridge (12) is rotatable about the longitudinal axis (28) for securing the filter cartridge (12) to the filter housing (14).

5. The filter cartridge according to claim 4,
**characterised in that**
with the gradient the distance of the land (30) from the surface (22) facing away increases in the direction of rotation (70).

6. The filter cartridge according to claim 4 or 5,
**characterised in that**
the filter cartridge (12) can be brought into the mounting position, in which in particular free ends (32, 34) of the land (30) of the retaining element (24) and free ends (52, 54) of the retaining land (38) terminate flush with each other, by less than a full rotation about the longitudinal axis.

7. The filter cartridge according to one of claims 4 to 6,
**characterised in that**
a radius of curvature of the retaining element (24) increases from a centre of a helical shape of the wall (26) of the retaining element (24) towards an edge of the helical shape.

8. The filter cartridge according to one of claims 4 to 7,
**characterised in that**
a sealing element (50), which can be pressed against a contact region (48) of the filter housing (14) by securing the filter cartridge (12) to the filter housing (14), is disposed on an edge on a front face side of a housing (16) of the filter cartridge (12).

9. The filter cartridge according to one of claims 4 to 8,
**characterised in that**
the accommodation space (18) is formed in an in particular bowl-shaped housing (16) of the filter cartridge (12) and is limited towards one side by the end plate (20) of the filter cartridge (12), which in particular has a plurality of through-openings (72, 74).

10. The filter cartridge according to one of claims 4 to 9,
**characterised in that**
the retaining element (24) has a plurality of apertures in the circumferential direction of the filter cartridge (12).

## Revendications

1. Filtre à fluide pour un véhicule à moteur, avec une cartouche filtrante (12) qui est fixée à un logement de filtre (14) du filtre à fluide (10), dans lequel la cartouche filtrante (12) présente un espace de réception (18) dans lequel un matériau filtrant est disposé, et dans lequel la cartouche filtrante (12) peut être connectée au logement de filtre (14) par rotation autour d'un axe longitudinal (28) de la cartouche filtrante (12), un élément de maintien (24) avec une entretoise (30) qui dépasse d'une paroi (26) de l'élément de maintien (24) est disposé au niveau d'une plaque d'extrémité (20) de la cartouche filtrante (12), **caractérisé en ce que**
la paroi (26) de l'élément de maintien (24) est réalisée en forme de spirale vue radialement à l'axe longitudinal (28), et dans lequel l'entretoise (30) de l'élément de maintien (24) enserre dans une position de montage de la cartouche filtrante (12) une entretoise de maintien (38) d'une butée (36) disposée sur le logement de filtre (14) et en forme de spirale vue radialement à l'axe longitudinal (28), et l'entretoise de maintien (38) présente une pente le long d'une direction de rotation (70) en regard d'une région d'appui (48) du logement de filtre (14) contre laquelle repose un élément d'étanchéité (50) de la cartouche filtrante (12), vue en direction de l'axe longitudinal (28).

2. Filtre à fluide selon la revendication 1,
**caractérisé en ce que**
un écart de l'entretoise de maintien (38) de la région d'appui (48) du logement de filtre (14) augmente dans la direction de rotation (70) dans le cas de la pente de l'entretoise de maintien (38) réalisée en continu autour de l'axe longitudinal (28).

3. Filtre à fluide selon la revendication 1 ou 2,
**caractérisé en ce que**
la butée en forme de spirale (36) tourne au moins par régions autour d'un manchon tubulaire (56) du logement de filtre (14) qui est introduit dans une ouverture (58) réalisée dans la plaque d'extrémité (20) de la cartouche filtrante (12).

4. Cartouche filtrante pour un filtre à fluide (10) d'un véhicule à moteur, qui peut être fixée à un logement de filtre (14) du filtre à fluide (10), dans laquelle la cartouche filtrante (12) présente un espace de réception (18) dans lequel un matériau filtrant est disposé, et dans laquelle la cartouche filtrante (12) peut être connectée au logement de filtre (14) par rotation autour d'un axe longitudinal (28) de la cartouche filtrante (12), un élément de maintien (24) avec une entretoise (30) qui dépasse d'une paroi (26) de l'élément de maintien (24) est disposé au niveau d'une plaque d'extrémité (20) de la cartouche filtrante (12), **caractérisée en ce que**
la paroi (26) de l'élément de maintien (24) est réalisée en forme de spirale vue en direction radiale par rapport à l'axe longitudinal (28), et dans laquelle l'entretoise (30) de l'élément de maintien (24) est réalisée pour enserrer dans une position de montage de la cartouche filtrante (12) une entretoise de maintien (38) d'une butée (36) disposée sur le logement de filtre (14) et en forme de spirale vue radialement à l'axe longitudinal (28), dans laquelle un écart de l'entretoise (30) de l'élément de maintien (24) d'une surface (22) de la plaque d'extrémité (20) détournée du matériau filtrant présente une pente dans une direction de rotation (70) dans laquelle la cartouche filtrante (12) peut être tournée autour de l'axe longitudinal (28) pour la fixation de la cartouche filtrante (12) au logement de filtre (14).

5. Cartouche filtrante selon la revendication 4,
**caractérisée en ce que**
l'écart de l'entretoise (30) par rapport à la surface détournée (22) augmente dans la direction de rotation (70) dans le cas de la pente.

6. Cartouche filtrante selon la revendication 4 ou 5,
**caractérisée en ce que**
la cartouche filtrante (12) peut être amenée par moins d'une rotation complète autour de l'axe longitudinal (28) dans la position de montage dans laquelle des extrémités libres (32, 34) de l'entretoise (30) de l'élément de maintien (24) et des extrémités libres (52, 54) de l'entretoise de maintien (38) se terminent notamment à surface plane l'une avec l'autre.

7. Cartouche filtrante selon une des revendications 4 à 6,
**caractérisée en ce que**
un rayon de courbure de l'élément de maintien (24) augmente d'un centre d'une forme de spirale de la paroi (26) de l'élément de maintien (24) à un bord de la forme de spirale.

8. Cartouche filtrante selon une des revendications 4 à 7,
**caractérisée en ce que**
un élément d'étanchéité (50) qui peut être pressé contre une région d'appui (48) du logement de filtre (14) par fixation de la cartouche filtrante (12) sur le logement de filtre (14) est disposé sur un bord frontal d'un logement (16) de la cartouche filtrante (12).

9. Cartouche filtrante selon une des revendications 4 à 8,
**caractérisée en ce que**
l'espace de réception (18) est réalisé dans un logement (16) de la cartouche filtrante (12), notamment en forme de pot, et limité vers un côté par la plaque d'extrémité (20) de la cartouche filtrante (12) présentant notamment une pluralité d'ouvertures de passage (72, 74).

10. Cartouche filtrante selon une des revendications 4 à 9,
**caractérisée en ce que**
l'élément de maintien (24) présente une pluralité de passages dans la direction périphérique de la cartouche filtrante (12).
